# EUROPÄISCHE PATENTSCHRIFT

(11) **EP 2 218 632 B1**
(45) Veröffentlichungstag und Bekanntmachung des Hinweises auf die Patenterteilung: **18.01.2012**
(21) Anmeldenummer: 09013555.9
(22) Anmeldetag: 28.10.2009
(51) Int. Cl.: B62D 65/18

(54) **Schubplatteneinheit**
Conveying platform unit
Plateforme de translation

(30) Priorität: 14.02.2009 DE 102009010454
(43) Veröffentlichungstag der Anmeldung: 18.08.2010
(73) Patentinhaber: Dr. Ing. h.c. F. Porsche AG, 70435 Stuttgart (DE)
(72) Erfinder: Krüger, Detlef, 04229 Leipzig (DE); Birnstiel, Michael, 04277 Leipzig (DE); Schulze, Hans-Joachim, 29392 Wesendorf (DE); Maschmeier, Horst, 32289 Rödinghausen (DE)

(56) Entgegenhaltungen:
- DE-A1- 19 858 989
- JP-A- 2006 151 255

## Beschreibung

Die Erfindung betrifft eine Schubplatteneinheit gemäß dem Oberbegriff des Patentanspruchs 1.

In der Serienfertigung von Kraftfahrzeugen werden verschiedenste Fördertechniken eingesetzt. Eine bekannte Fördertechnik ist das Fördern von Karossen auf Schubplatteneinheiten. Derartige Schubplatteneinheiten weisen in der Regel Hubvorrichtungen auf, um in Abhängigkeit der jeweils zu erledigenden Tätigkeit die Karosse gegenüber einer Normalposition angehoben werden kann. Damit wird für den Werker eine ergonomische Arbeitshaltung ermöglicht.

Aus der JP 2006151255 A, die den Oberbegriff des Anspruchs 1 bildet, ist es bekannt, eine Schubplatteneinheit zum Fördern von Karossen mit einer oberen Arbeitsplatte zu versehen, die mit dem Hallenboden fluchtet und die eine Hubvorrichtung aufweist. Der Tragrahmen der Hubvorrichtung ist von einer Normalposition in eine dem gegenüber angehobene Position verfahrbar, um die Karosse in eine ergonomisch günstigere Position zu verbringen. Die Arbeitsplatte weist zumindest einen Teilbereich auf, der gegenüber der Normalposition in eine abgesenkte Position verfahren werden kann.

Die DE 297 24 417 U1 zeigt eine derartige Schubplatteneinheit, die aus unterhalb eines Hallenbodens geführten Schubskids besteht, wobei jeder Schubskid eine Hubvorrichtung mit einer Lastebene trägt, um die Höhe der Karosse über dem Hallenboden zu Montagezwecken zu verändern. Zusätzlich kann die Karosse um eine Hochachse um zumindest 90° gedreht werden.

Insbesondere bei großvolumigen Karosserien, wie beispielsweise Karosserien von sog. Sport-Utility-Vehicles (SUV) kann es für den Werker in Abhängigkeit von dessen Größe ergonomisch ungünstig sein, Montagearbeiten am Dach der Karosse vorzunehmen.

Die Aufgabe der Erfindung besteht darin, eine gattungsgemäße Schubplatteneinheit in der Art weiterzuentwickeln, dass Arbeiten im Bereich des Daches ergonomisch günstig durchzuführen sind.

Die Aufgabe wird erfindungsgemäß mit den Merkmalen des Patentanspruchs 1 gelöst. Vorteilhafte Ausgestaltungen der Erfindung ergeben sich anhand der Merkmale der abhängigen Ansprüche.

Der Kern der Erfindung ist darin zu sehen, dass die Hubvorrichtung in eine gegenüber einer Normalposition abgesenkte Position vertikal verschiebbar ist, so dass die auf dem Tragrahmen der Hubvorrichtung mitgeführte Karosse, insbesondere das Dach der Karosse, von oben durch den Werker optimal zu erreichen ist. Anders ausgedrückt, die Karosse bzw. deren Haltevorrichtung am Tragrahmen kann zumindest teilweise tiefer als der Hallenboden abgesenkt werden. Mit der Unterteilung der Arbeitsplatte in Teilbereiche wird erreicht, dass insbesondere die an die Hubvorrichtung angrenzenden Bereiche der Arbeitsplatte abgesenkt werden können. Der oder die Teilbereiche werden beim Absenken der Hubvorrichtung quasi aus dem Weg geräumt, damit sie beim Absenken der Karosse nicht mit dieser kollidieren. Unter Normalposition der Hubeinrichtung ist im Sinne der Erfindung die Position zu verstehen, bei der sich die Karosse unmittelbar oberhalb der Arbeitsplatte, d.h. mit dem geringst möglichen Abstand zur Arbeitsplatte, befindet. Wenn die Karosse unterhalb der Normalposition verfahren wird, lässt sich das Dach für den Werker besser erreichen. Die Größe der Teilbereiche richtet sich in allererster Linie nach den Überhängen der Karosse bzw. deren Komponenten oder zu Montagezwecken angeschlossene Adapter. Je mehr eine Karosse über die Hubvorrichtung übersteht, desto größer sind die Teilbereiche zu wählen.

Gemäß der Erfindung kann der Teilbereich gegen eine Vorspannkraft absenkbar gehalten sein, wobei diese Vorspannkraft den Teilbereich in der Normalposition und in der angehobenen Position der Hubeinrichtung fluchtend zur Arbeitsplatte hält. D.h., die Vorspannkraft ist so groß, dass Trittbelastungen durch einen Werker nicht zur Absenkung des Teilbereichs führen. Erst die Kraft der Hubvorrichtung, die beim Absenken unter Normalposition auf den Teilbereich einwirkt, ist größer als die Vorspannkraft, so dass ein definiertes Mitnehmen und damit ein Absenken der Teilbereiche erfolgt.

Alternativ ist denkbar, die Teilbereiche simultan zur Hubvorrichtung mittels eines eigenen Antriebes abzusenken.

Für die Mitnahme der Teilbereiche durch die Hubvorrichtung kann am Tragrahmen zumindest ein Mittel zur Mitnahme des Teilbereichs vorgesehen sein, das den Teilbereich beim Absenken der Hubeinrichtung unter die Normalposition gegen die Vorspannkraft mitnimmt.

Vorzugsweise können hierzu die Mittel zu Mitnahme des Teilbereichs vom Tragrahmen in Richtung des Teilbereichs abstehen und diesen mitnehmen, sobald die Normalposition unterschritten wird. Das bedeutet, dass sich die Mittel zur Mitnahme zumindest in teilweise Überdeckung mit dem entsprechenden Teilbereich befinden.

Besonders effektiv ist es, wenn als Mittel zur Mitnahme ein ohnehin schon vorhandenes Teil genutzt wird. In einer bevorzugten Ausgestaltungsform kann das Mittel zur Mitnahme ein Aufnahmewinkel sein, der die Karosse am Tragrahmen hält. Die von dem Tragrahmen der Hubvorrichtung abragenden Aufnahmewinkel werden dabei unter die Ebene der Arbeitsplatte abgesenkt. Auf diese Art und Weise lässt sich die auf der Hubvorrichtung mitgeführte Karosse bis zu 10 cm nach unten absenken.

Ein unterer Schenkel des Aufnahmewinkels kann eine Kontaktfläche aufweisen, die parallel zur Oberseite des Teilbereichs verläuft. Mit der Variation der Größe der Kontaktfläche wird die Flächenpressung beim Herunterdrücken der Teilbereiche bestimmt.

Eine vorteilhafte Ausgestaltung der Erfindung wird im Folgenden anhand der Zeichnung näher erläutert. Dabei zeigen:
- Figur 1: eine perspektivische Ansicht einer Schubplatteneinheit mit Hubvorrichtung in einer Normalposition,
- Figur 2: eine perspektivische Ansicht der Schubplatteneinheit gemäß Figur 1 in einer gegenüber der Normalposition abgesenkten Position sowie
- Figur 3: eine Schnittdarstellung gemäß Linie II-II in Figur 1 mit einer auf der Hubeinrichtung mitfahrenden Karosse.

In den Hallenboden 1 einer nicht weiter dargestellten Montagehalle ist eine Schubplattenstraße in einen Graben eingelassen, die aus hintereinander angeordneten Schubplatteneinheiten 2 besteht. Jede der Schubplatteneinheiten umfasst eine im Wesentlichen rechteckige Arbeitsplatte 3, die an ihren Stirnseiten 4 jeweils aneinander stoßen. Auf der Arbeitsplatte 3 kann der Werker an der Seite der sich auf der Schubplatteneinheit befindlichen Karosse mitfahren und die in dieser Taktzeit vorgesehenen Tätigkeiten verrichten. Nach Fertigstellung der vorgesehenen Aufgaben bzw. nach Abschluss der Taktzeit kann der Werker die Arbeitsplatte 3 verlassen und um zur nächstfolgenden Schubplatteneinheit zu gehen. Jede Schubplatteneinheit 2 kann mittels eines schienengeführten und nicht weiter dargestellten Antriebs, der sich unterhalb der Arbeitsplatte 3 befindet, gemäß Pfeilrichtung A gefördert werden. Die Fördertechnik ist nicht Gegenstand der Erfindung und kann nach dem Stand der Technik gewählt werden.

Für jede Schubplatteneinheit 2 ist eine Hubvorrichtung 5 vorgesehen, um eine Karosse 6 in die für den Arbeitstakt jeweils ergonomisch günstige Höhenposition gemäß Pfeilrichtung B zu verfahren.

Die Hubvorrichtung 5 umfasst einen oberen Tragrahmen 7, der durch entsprechende Mechanik vertikal bewegbar ist. Die unter dem Tragrahmen 7 angeordnete Mechanik entspricht dem Stand der Technik und wird mittels eines umlaufenden Faltenbalgs 8 abgeschirmt.

Für die Aufnahme einer Karosse 6 stehen von den Längsseiten 9 und 10 des plattenförmigen Tragrahmens 7 Aufnahmewinkel 11, 12, 13 und 14 ab. Die Aufnahmewinkel 11, 12, 13 und 14 sind baugleich ausgebildet. Aus diesem Grund wird im folgenden der Aufbau und die Wirkungsweise anhand des Aufnahmewinkels 11 näher erläutert. Der Aufnahmewinkel ist mit einem Schenkel 15 an der Längsseite 9 befestigt. Auf dem zweiten Schenkel 17 ist ein Dorn 19 aufrecht stehend angebracht. Die Dorne dienen der Aufnahme der Karosse. Hierzu greifen die Dorne entweder in Aufnahmebohrungen direkt an der Karosserie oder - wie in dem dargestellten Ausführungsbeispiel - in Aufnahmebohrungen eines Adapters 18 ein, der an der Unterseite der Karosse befestigt ist.

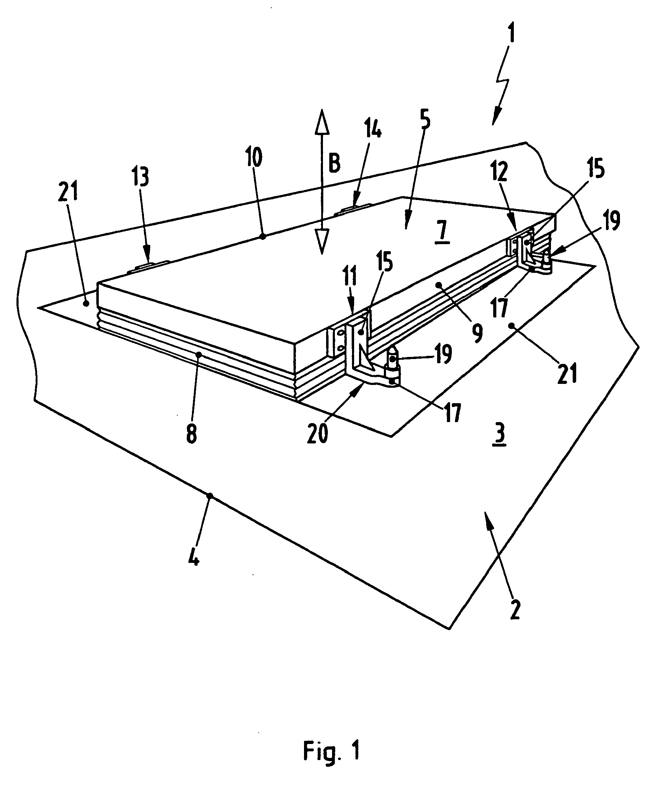

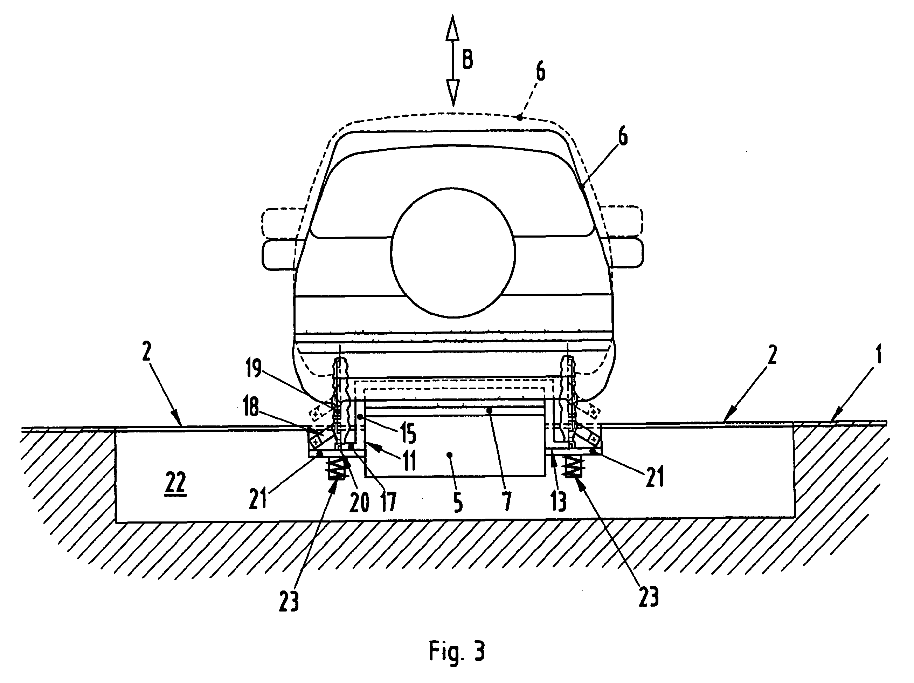

Der untere Schenkel 17 erstreckt sich in Normalposition der Hubvorrichtung mit einem geringen Abstand zur Oberfläche des angrenzenden Teilbereichs 21. Eine Kontaktfläche 20 an der Unterseite des Schenkels 17 verläuft parallel zur Oberfläche des angrenzenden Teilbereichs 21. In einer gegenüber der Normalposition angehobenen Position der Hubvorrichtung vergrößert sich der Abstand zwischen Kontaktfläche 20 und der Oberfläche des Teilbereichs 21 entsprechend. Die Normalposition ist in Figur 1 sowie gestrichelt in Figur 3 dargestellt.

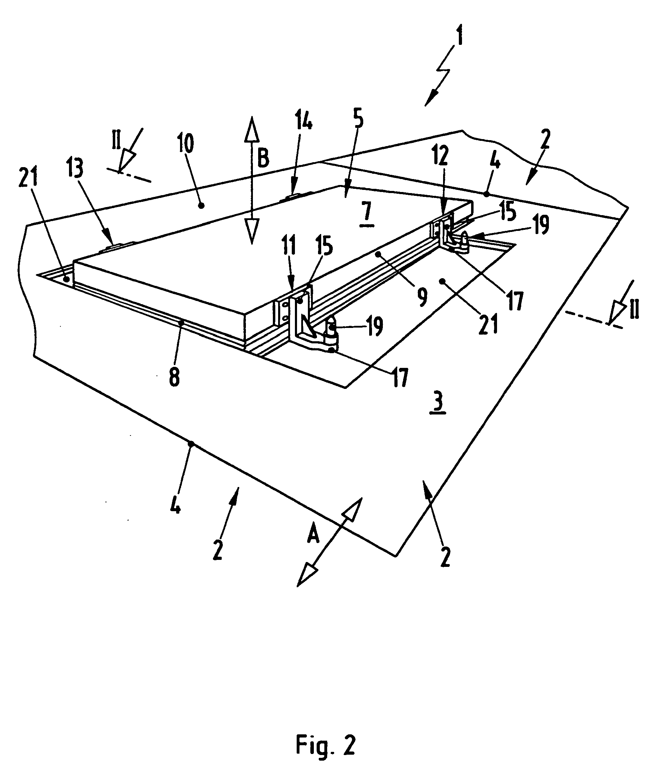

Für eine gegenüber der Normalposition abgesenkte Position der Hubvorrichtung 5 ist jeder Teilbereich 21 gegenüber einer Basis 22, die der Fördertechnik der Schubplatteneinheit 2 zugeordnet ist, federnd gelagert, was in Figur 3 mit Bezugszeichen 23 bezeichnet ist. Wie in den Darstellungen gemäß Figur 2 und 3 (durchgezogene Linien) ersichtlich, ist die Hubvorrichtung 5 in eine gegenüber der Normalposition abgesenkte Position verfahren. Sobald beim Absenken der Hubvorrichtung 5 die Kontaktflächen 20 der Aufnahmewinkel 11, 12, 13 und 14 in Kontakt mit der Oberfläche des jeweiligen Teilbereichs 21 gelangen, drücken die unteren Schenkel 17 den Teilbereich 21 gegen die Vorspannkraft der federnden Lagerung nach unten. Das heißt, die Oberfläche der Teilbereiche 21 schließt nicht mehr flächenbündig mit der Oberfläche der Arbeitsplatte 3 ab. Die über die Aufnahmewinkel 11, 12, 13, 14 von der Hubvorrichtung 5 auf die Teilbereiche 21 aufgebrachte Kraft ist entsprechend größer als die Vorspannkraft der Feder.

In Abhängigkeit des nach unten zur Verfügung stehenden Raumes lässt sich die auf der Hubvorrichtung abgestellte Karosse bei Bedarf auf ein Niveau unter die Normalposition versenken. Aus sicherheitsrelevanten Überlegungen sind mehrere Sicherheitssysteme vorgesehen, um Fehlbedienungen durch den Werker zu vermeiden. Softwareseitig wird ein Absenken unter die Normalposition nur an bestimmten Arbeitsstationen erlaubt. Nur an diesen erlaubten Arbeitsstationen kann die Hubvorrichtung aktiviert werden, wenn beide Werker der Arbeitsstation gemeinsam, beispielsweise über einen Fußtaster, die Hubvorrichtung freigeben. Schließlich ist hardwareseitig an der jeweiligen Arbeitsstation ein Rollenendschalter vorgesehen, der das Absenken an der Arbeitsstation erlaubt.

## Patentansprüche

1. Schubplatteneinheit (2) zum Fördern von Karossen (6) für die Montage von Kraftfahrzeugen, deren obere Arbeitsplatte (3) mit dem Hallenboden (1) fluchtet und die eine Hubvorrichtung (5) aufweist, deren Tragrahmen (7) von einer Normalposition in eine demgegenüber angehobene Position verfahrbar gehalten ist, damit sich die Karosse (6) für den Arbeitstakt in einer ergonomisch günstigen Position befindet, wobei die Arbeitsplatte (3) zumindest einen Teilbereich (21) aufweist, der gegenüber der Arbeitsplatte (3) absenkbar ist, um den Tragrahmen (7) der Hubvorrichtung (5) von der Normalposition in eine demgegenüber abgesenkte Position zu verfahren, **dadurch gekennzeichnet, dass** der Teilbereich (21) gegen eine Vorspannkraft absenkbar ist, wobei diese Vorspannkraft den Teilbereich (21) in der Normalposition und in der angehobenen Position der Hubeinrichtung fluchtend zur Arbeitsplatte (3) hält.

2. Schubplatteneinheit nach Anspruch 1, **dadurch gekennzeichnet, dass** am Tragrahmen (7) zumindest ein Mittel zur Mitnahme des Teilbereichs (21) vorgesehen ist, das den Teilbereich (21) beim Absenken der Hubeinrichtung unterhalb ihrer Normalposition gegen die Vorspannkraft mitnimmt.

3. Schubplatteneinheit nach Anspruch 2, **dadurch gekennzeichnet, dass** die Mittel zu Mitnahme des Teilbereichs (21) vom Tragrahmen (7) in Richtung des Teilbereichs (21) abstehen und an diesen mitnehmen, sobald die Normalposition unterschritten wird.

4. Schubplatteneinheit nach einem der Ansprüche 2 oder 3, **dadurch gekennzeichnet, dass** das Mittel zur Mitnahme ein Aufnahmewinkel (11, 12, 13, 14) ist, der die Karosse (6) am Tragrahmen (7) hält.

5. Schubplatteneinheit nach Anspruch 4, **dadurch gekennzeichnet, dass** der Aufnahmewinkel (11, 12, 13, 14) einen unteren Schenkel (17, 18) aufweist, der eine Kontaktfläche aufweist, die parallel zur Oberseite des Teilbereichs (21) verläuft.

6. Schubplatteneinheit nach Anspruch 5, **dadurch gekennzeichnet, dass** an dem unteren Schenkel (17, 18) ein aufrecht stehender Dorn (19, 20) befestigt ist.

7. Fertigungsstraße mit mehreren hintereinander angeordneten Schubplatteneinheiten nach einem der vorgenannten Ansprüche.

## Claims

1. Skillet unit (2) for conveying bodyshells (6) for the assembly of motor vehicles, the upper work platform (3) of which skillet unit is aligned with the assembly hall floor (1) and comprises a lifting device (5) whose supporting frame (7) is held such that it can be moved from a normal position into a position which is raised with respect to this normal position so that the bodyshell (6) is situated in an ergonomically favourable position for the work cycle, wherein the work platform (3) has at least one subregion (21) which can be lowered with respect to the work platform (3) in order to move the supporting frame (7) of the lifting device (5) from the normal position into a position which is lowered with respect to this normal position, **characterized in that** the subregion (21) can be lowered counter to a prestressing force, wherein this prestressing force keeps the subregion (21) in alignment with the work platform (3) in the normal position and in the raised position of the lifting device.

2. Skillet unit according to Claim 1, **characterized in that** at least one means for taking along the subregion (21) is provided on the supporting frame (7), which means takes along the subregion (21) counter to the prestressing force when the lifting device is lowered below its normal position.

3. Skillet unit according to Claim 2, **characterized in that** the means for taking along the subregion (21) project from the supporting frame (7) in the direction of the subregion (21) and take along the latter as soon as the position falls below the normal position.

4. Skillet unit according to either of Claims 2 and 3, **characterized in that** the take-along means is a mounting bracket (11, 12, 13, 14) which holds the bodyshell (6) on the supporting frame (7).

5. Skillet unit according to Claim 4, **characterized in that** the mounting bracket (11, 12, 13, 14) has a lower leg (17, 18) which has a contact face which extends parallel to the upper side of the subregion (21).

6. Skillet unit according to Claim 5, **characterized in that** an upright prong (19, 20) is fastened to the lower leg (17, 18).

7. Production line comprising a plurality of successively arranged skillet units according to one of the preceding claims.

## Revendications

1. Plateforme de translation (2) pour le transport de carcasses (6) destinées au montage de véhicules automobiles, dont la plaque de travail (3) supérieure est alignée avec le plancher du hangar (1) et comportant un dispositif de levage (5) dont le châssis porteur (7) est maintenu de façon à pouvoir être déplacé d'une position normale dans une position surélevée par rapport à elle, la carcasse (6) se trouvant ici dans une position avantageuse sur le plan ergonomique pour la cadence de travail, la plaque de travail (3) comportant au moins une zone partielle (21) pouvant être descendue par rapport à la plaque de travail (3), pour déplacer le châssis porteur (7) du dispositif de levage (5) de la position normale dans une position abaissée par rapport à elle, **caractérisée en ce que** la zone partielle (21) peut être descendue en allant à l'encontre d'une force de précontrainte, cette force de précontrainte maintenant la zone partielle (21) dans la position normale et s'alignant sur la plaque de travail (3) dans la position relevée du dispositif de levage.

2. Plateforme de translation selon la revendication 1, **caractérisée en ce qu'**au moins un moyen d'engrenage de la zone partielle (21) est prévu au niveau du châssis porteur (7), ledit moyen engrenant la zone partielle (21) lors de l'abaissement du dispositif de levage en dessous de sa position normale en allant à l'encontre de la force de précontrainte.

3. Plateforme de translation selon la revendication 2, **caractérisée en ce que** les moyens d'engrenage de la zone partielle (21) ressortent du châssis porteur (7) en direction de la zone partielle (21) et s'engrènent au niveau de celui-ci dès lors que la position normale est descendue.

4. Plateforme de translation selon l'une quelconque des revendications 2 ou 3, **caractérisée en ce que** le moyen d'engrenage est un angle de logement (11, 12, 13, 14) maintenant la carcasse (6) contre le châssis porteur (7).

5. Plateforme de translation selon la revendication 4, **caractérisée en ce que** l'angle de logement (11, 12, 13, 14) comporte un côté inférieur (17, 18) comportant une surface de contact s'étendant parallèlement au côté supérieur de la zone partielle (21).

6. Plateforme de translation selon la revendication 5, **caractérisée en ce qu'**un mandrin (19, 20) maintenu debout est fixé au côté inférieur (17, 18).

7. Chaîne de production équipée de plusieurs plateformes de translation selon l'une quelconque des revendications précédentes disposées les unes à la suite des autres.
